# EUROPEAN PATENT APPLICATION

(11) **EP 3 466 847 A1**
(43) Date of publication of application: **10.04.2019**
(21) Application number: 17810193.7
(22) Date of filing: 01.06.2017
(51) Int. Cl.: B65G 47/91, B25J 13/00, B65B 35/16, B65B 35/18

(54) **FOODSTUFF PACKING DEVICE**

(30) Priority: 06.06.2016 JP 2016112777
(71) Applicant: Kawasaki Jukogyo Kabushiki Kaisha, Kobe-shi, Hyogo 650-8670 (JP)
(72) Inventor: HASHIMOTO, Yasuhiko, Hyogo 650-8670 (JP); HASEGAWA, Shogo, Hyogo 650-8670 (JP); BANDO, Kenji, Hyogo 650-8670 (JP); TANAKA, Keiichi, Hyogo 650-8670 (JP); KATAFUCHI, Hiroshi, Hyogo 650-8670 (JP); HIRATA, Kazunori, Hyogo 650-8670 (JP)
(74) Representative: Witte, Weller & Partner Patentanwälte mbB
(86) International application number: PCT/JP2017/020428
(87) International publication number: WO 2017/213015

(57) **Abstract**

A packing device (10) of food (40) includes a feeding part (20) configured to supply food (40), a gripping part (30) configured to grip a plurality of foods (40) placed in order by the feeding part (20), and a conveying part configured to convey onto a tray (41) the plurality of foods (40) gripped by the gripping part (30). The gripping part (30) has a pair of pinching members (31) configured to pinch the plurality of foods (40) from both sides in directions in which the plurality of foods (40) are placed in order.

## Description

### TECHNICAL FIELD

The present disclosure relates to a food packing device which packs food into a tray.

### BACKGROUND ART

Conventionally, as devices which pack food into a tray, food container packing devices, for example, disclosed in Patent Document 1 have been known. In the container packing devices of food, the food drops from a conveyor onto a fixed chute plate. In this fixed chute plate, the food falls while being sequentially changed in its orientation by a timing holder and a holding container. Then, the food which became a given posture falls onto a conveying part from the fixed chute plate, and is stackedly put into the container conveyed by the conveying part.

### [Reference Document of Conventional Art]

### [Patent Document]

[Patent documents 1] JP1994-024408A

### DESCRIPTION OF THE DISCLOSURE

### [Problems to be Solved by the Disclosure]

The container packing device of Patent Document 1 drops the food sequentially to the timing holder, the holding container, and the container. The food container packing device may pack the food, such as rice balls and sandwiches into the container. Such food is easy to deform and, therefore, once the food is deformed by an external force, it will not resume its original shape even if the external force is removed. Thus, if the food deforms due to the external force when the food drops, the commodity value will be spoiled by the deformation of the food. As a result, a rate of nonconforming products may increase to reduce the work efficiency.

The present disclosure is made in order to solve the above problem, and one purpose thereof is to provide a food packing device which can control a reduction in a work efficiency.

### [Summary of the Disclosure]

In order to achieve the purpose, a food packing device according to one aspect of the present disclosure includes a feeding part configured to supply food, a gripping part configured to grip a plurality of foods placed in order by the feeding part, and a conveying part configured to convey onto a tray the plurality of foods gripped by the gripping part. The gripping part has a pair of pinching members configured to pinch the plurality of foods from both sides in directions in which the plurality of foods are placed in order.

Thus, even if the foods are easy to deform, by the pair of pinching members pinching the food, the foods can be accommodated in the tray without being deformed. Therefore, increase in nonconforming products is prevented and the reduction in work efficiency is controlled.

The pair of pinching members may be comprised of plate bodies provided in parallel to each other. Thus, since the pinching members have the simple shape, the product cost is lowered. Further, since the pinching members are thin, they can pack the foods into the tray with a reduced spacing from previously-accommodated foods in the tray.

The feeding part may have a suction head configured to suck the food. Even if the foods are easy to deform, the foods can be supplied without the deformation.

The gripping part may further have a supporting member configured to support the plurality of foods from a different side from both ends in the directions in which the plurality of foods are placed in order. Thus, by supporting the foods by the supporting members in addition to the pinching members, the foods can be gripped more securely.

The supporting member may have a mountain shape spreading downwardly. Thus, by making the mountain-shaped supporting members contact an upper part of triangular food, the foods can be gripped more securely.

An outer surface of the foods may have a pair of parallel surfaces, and the pair of pinching members may pinch the plurality of foods placed in order in a state the parallel surfaces contact each other. Thus, the foods are gripped stably, a storage rate of the foods in the tray increases, and the work efficiency is improved.

The food packing device may be comprised of a robot including a pair of arms each having the gripping part at a tip end thereof. Thus, the food packing work is possible, for example, only by using a general-purpose robot of which the tip end can be replaced.

### [Effect of the Disclosure]

The present disclosure has the structure described above and has the effect to control the reduction in the work efficiency.

### BRIEF DESCRIPTION OF DRAWINGS

Fig. 1 is a plan view schematically illustrating the entire structure of one example of a robot to which a food packing device according to one embodiment is applied.
Fig. 2 is a functional block diagram schematically illustrating a configuration of a control device of the robot in Fig. 1.
Fig. 3 is a perspective view schematically illustrating a state in which a feeding part supplies food to a workbench.
Fig. 4 is a perspective view schematically illustrating a state in which a gripping part grips the food.
Fig. 5 is a perspective view schematically illustrating a state in which a conveying part conveys the food onto a tray.

### MODES FOR CARRYING OUT THE DISCLOSURE

Hereinafter, one preferable embodiment is described with reference to the drawings. Note that, below, the same or corresponding elements are denoted with the same reference characters throughout the drawings to omit redundant description. Moreover, the drawings illustrate each element schematically for easier understandings. Further, directions in which a pair of arms extend are referred to as left-and-right directions, directions parallel to an axial center of a base shaft are referred to as vertical (up-and-down) directions, and directions perpendicular to the left-and-right directions and the vertical directions are referred to as front-and-rear directions.

### (Embodiment)

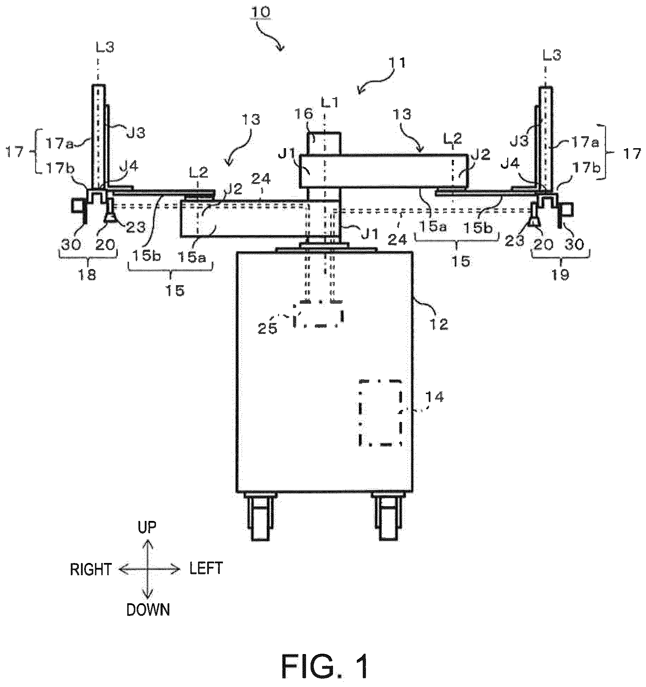

A packing device 10 of food 40 according to this embodiment is a device which packs a plurality of foods 40 into a tray 41. A case where the packing device 10 of the food 40 according to the present disclosure is constructed by a robot 11 illustrated in Fig. 1 is described. Note that the packing device 10 of food 40 is not limited the case where it is comprised of the robot 11. Note that, although a horizontal articulated dual-arm robot is described as the robot 11, the packing device may adopt a robot 11, such as the horizontal articulated type or a vertical articulated type. Moreover, the food 40 is a food product having a constant shape and, for example, it may include a rice ball and a sandwich.

As illustrated in Fig. 1, the robot 11 includes a carriage 12, a pair of robot arms (hereinafter, may simply referred to as "arms") 13 supported by the carriage 12, and a control device 14 accommodated in the carriage 12. Each arm 13 is a horizontal articulated robot arm and is provided with an arm part 15, a wrist part 17, and a hand part 18 or 19. The arm part 15 and the wrist part 17 function as a conveying part which conveys a plurality of foods 40 onto the tray 41. Note that the left arm 13 and the right arm 13 may have substantially the same structure except for the hand parts 18 and 19. Moreover, the left arm 13 and the right arm 13 may operate independently or operate in association with each other.

In this example, the arm part 15 is comprised of a first link 15a and a second link 15b. The first link 15a is coupled to a base shaft 16 fixed to an upper surface of the carriage 12, via a rotary joint J1 so that it is rotatable on a rotation axis L1 passing through an axial center of the base shaft 16. The second link 15b is coupled to a tip end of the first link 15a via a rotary joint J2 so that it is rotatable on a rotation axis L2 defined at the tip end of the first link 15a.

The wrist part 17 is comprised of an elevating part 17a and a rotary part 17b. The elevating part 17a is coupled to a tip end of the second link 15b via a linear-motion joint J3 so that it ascends and descends with respect to the second link 15b. The rotary part 17b is coupled to a lower end of the elevating part 17a via a rotary joint J4 so that it is rotatable on a rotation axis L3 defined at the lower end of the elevating part 17a.

Each of the right hand part 18 and the left hand part 19 is coupled to the rotary part 17b of the wrist part 17, and is comprised of a feeding part 20 which supplies the food 40 and a gripping part 30 which grips the food 40. The feeding part 20 has suction heads 23. The feeding part 20 and the gripping part 30 are provided to a tip end of the arm 13. Note that details of the right hand part 18 and the left hand part 19 will be described later.

The suction heads 23 are connected with a vacuum generator 25 via piping 24, and is caused to generate negative pressure by the vacuum generator 25. The vacuum generator 25 may be, for example, a vacuum pump, CONVUM®, etc., and is provided to the carriage 12 or the arm 13. For example, an on-off valve (not illustrated) is provided to the piping 24, and suction by the suction heads 23 and a stop of the suction are performed by opening and closing the piping 24 by the on-off valve. The operation of the vacuum generator 25 and the opening and closing of the on-off valve are controlled by the control device 14.

Each arm 13 having the above structure has joints J1-J4. The arm 13 is provided with the driving servo motors (not illustrated) and encoders (not illustrated) which detect rotational angles of the servo motors, corresponding to the joints J1-J4, respectively. Moreover, the rotation axes L1 of the first links 15a of the two arms 13 are located on the same straight line, and the first link 15a of one arm 13 and the first link 15a of the other arm 13 are disposed vertically with a height difference.

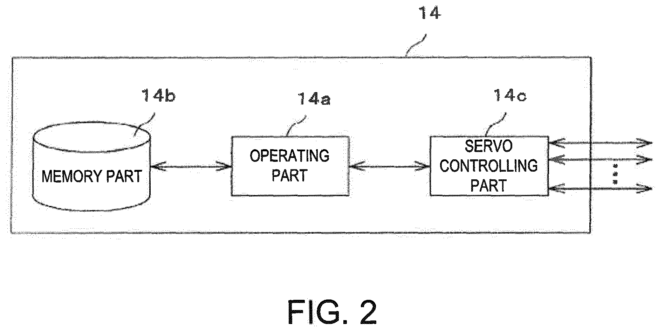

As illustrated in Fig. 2, the control device 14 includes an operating part 14a, such as a CPU, a memory part 14b, such as a ROM and a RAM, and a servo controlling part 14c. The control device 14 is a robot controller provided with a computer, such as a microcontroller, for example. Note that the control device 14 may be comprised of a sole control device 14 which carries out a centralized control, or may be comprised of a plurality of control devices 14 which collaboratingly carry out a distributed control.

The memory part 14b stores information, such as a basic program as a robot controller, and various fixed data. The operating part 14a controls various operations of the robot 11 by reading and executing software, such as the basic program, stored in the memory part 14b. That is, the operating part 14a generates a control instruction for the robot 11, and outputs it to the servo controlling part 14c. The servo controlling part 14c is configured to control driving of the servo motors corresponding to the joints J1-J4 of each arm 13 of the robot 11 based on the control instructions generated by the operating part 14a.

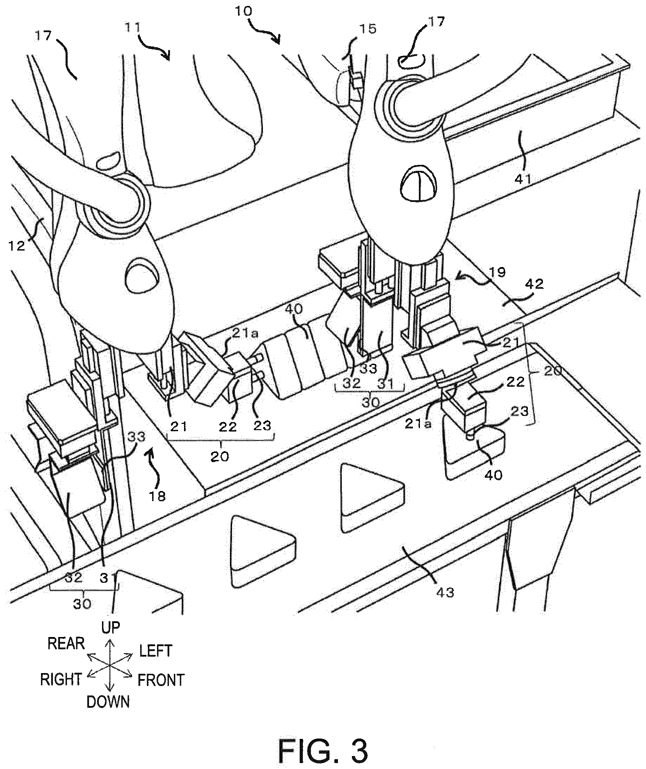

Next, the right hand part 18 and the left hand part 19 are described with reference to Fig. 3. Each of the hand parts 18 and 19 is provided with the feeding part 20 and the gripping part 30. The relative position of the feeding part 20 and the gripping part 30 is changed between the left-and-right directions and the front-and-rear directions by rotation of the wrist part 17.

The feeding part 20 has a pedestal 21, a rotary member 22, and the suction heads 23. One or more (in this embodiment, two) suction heads 23 may be provided to the feeding part 20.

The pedestal 21 extends downwardly from the wrist part 17, and has a slope surface 21a which inclines with respect to the extending directions. The slope surface 21a faces downwardly in the front-and-rear directions or the left-and-right directions. The rotary member 22 is rotatably attached to the slope surface 21a of the pedestal 21. The rotary member 22 rotates about an axis perpendicular to the slope surface 21a. The suction heads 23 are attached to the rotary member 22. The suction heads 23 are suction pads made of elastic material, such as rubber, and each having a cap shape which opens in a direction separating from the rotary member 22. The two suction heads 23 are disposed so that there is no height difference between their opening edges.

The openings of the suction heads 23 change their direction between downward and lateral (left or right direction) by rotating the rotary member 22. For example, in the case of Fig. 3, the suction heads 23 of the left hand part 19 faces downwardly, and the suction heads 23 of the right hand part 18 faces leftwardly.

The gripping part 30 has a pinching member 31 and a supporting member 32. For example, the pinching member 31 has a rectangular plate shape and extends downwardly. One main surface (opposing surface) of the pinching member 31 faces away from the feeding part 20 and in a lateral direction opposite from a lateral direction in which the openings of the suction heads 23 face. For example, in the case of the right hand part 18 in Fig. 3, the opposing surface of the pinching member 31 faces to the right, while the openings of the suction heads 23 face to the left.

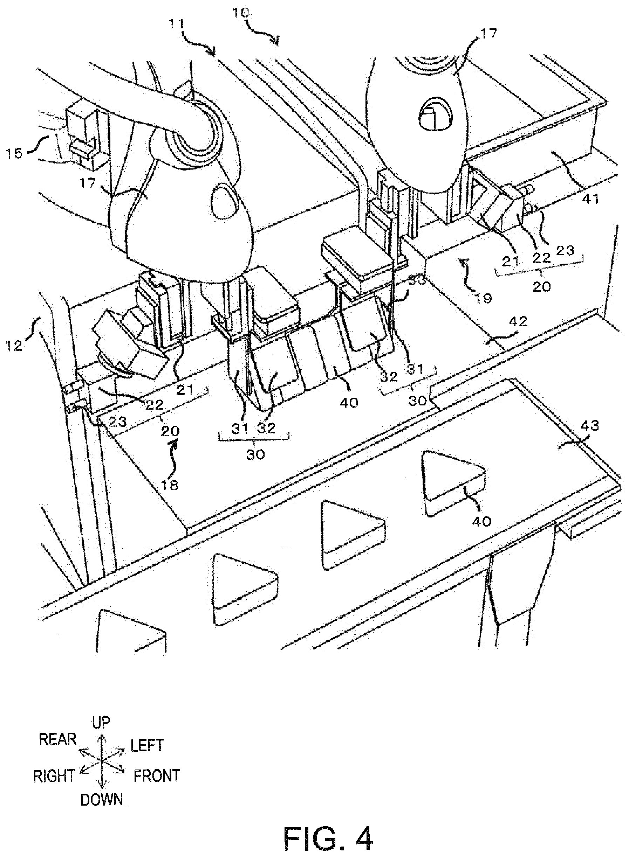

A pair of pinching members 31 are comprised of the pinching member 31 of the right hand part 18 and the pinching member 31 of the left hand part 19. The opposing surface of the pinching member 31 of the right hand part 18 and the opposing surface of the pinching member 31 of the left hand part 19 may be oriented in parallel to each other and oppose to each other by the rotations of the wrist parts 17. For example, in the case of Fig. 4, the opposing surface of the right hand part 18 faces to the left and the opposing surface of the left hand part 19 faces to the right so that the pair of opposing surfaces face each other.

The supporting member 32 is oriented, at the opposing surface side of the pinching member 31, perpendicular to the opposing surface. The supporting member 32 may be a shape which can support portions other than both sides of the plurality of foods 40 placed in order (e.g., an upper part of the foods 40). In this embodiment, since the triangular rice balls are used as the foods 40, the supporting member 32 is formed in a mountain shape which spreads downwardly (inverted V-shape). The supporting member 32 may be formed by connecting ends of two plate bodies, or may be formed by bending a plate body. Moreover, the supporting member 32 may have a dimension corresponding to one or more of the foods 40 placed in order. Note that, if the supporting member 32 has a dimension covering a plurality of foods 40, the supporting member 32 can support the food 40 more stably.

Next, a method of packing the food 40 into the tray 41 by the robot 11 having the above structure is described with reference to Figs. 3 to 5. This method is controlled by the control device 14. Note that, although the method of packing the triangular rice balls is described herein, description of methods of packing other foods 40 is omitted because the methods are the same. Moreover, an outer surface of the food 40 has three rectangular surfaces and two triangular surfaces. The two triangular surfaces are provided in parallel with each other.

As illustrated in Fig. 3, a workbench 42 and a conveyor belt 43 are disposed in front of the robot 11, and the tray 41 is disposed at the side of the robot 11 (in this embodiment, left side). The workbench 42 is a table where the foods 40 are placed temporarily, and is disposed between the robot 11 and the conveyor belt 43. The conveyor belt 43 is a device which transfers the food 40 in front of the robot 11. In this embodiment, since the area of the triangular surface of the food 40 is larger than the area of the rectangular surface, the food 40 is conveyed on the conveyor belt 43 in the left-and-right direction so that the triangular surface face in the vertical directions. For example, the tray 41 is a container which holds the food 40 for shipping, and opens upwardly.

The robot 11 first turns the openings of the suction heads 23 of the right hand part 18 or the left hand part 19 downwardly, and makes the openings contact the triangular surface of the food 40 on the conveyor belt 43. Here, the vacuum generator 25 (Fig. 1) is operated and the piping 24 (Fig. 1) is opened by the on-off valve. Thus, the food 40 is sucked by the suction heads 23 so that the food 40 adheres to the suction heads.

The suction heads 23 are then moved above the workbench 42 by the arm part 15 to carry the food 40 above the workbench 42. Moreover, the rotary member 22 is rotated to turn the openings of the suction heads 23 from down to lateral. Here, the openings the suction heads 23 of one of the right hand part 18 and the left hand part 19 face toward the other hand part 18 or 19. For example, in the case of Fig. 3, the openings of the suction heads 23 of the right hand part 18 face to the left. Thus, the posture of the food 40 is changed so that the rectangular surface is oriented downwardly.

Then, the suction heads 23 are lowered by the wrist part 17, and the piping 24 (Fig. 1) is closed by the on-off valve. Thus, the suction of the food 40 by the suction heads 23 is stopped, and the food 40 is placed on the workbench 42. Here, when food(s) 40 has already been placed on the workbench 42, the food 40 is placed in order at the left side or the right side of the existing food(s) 40. Here, the plurality of foods 40 are placed in order so that the triangular surfaces of the foods 40 contact each other.

The foods 40 are supplied to the workbench 42 by such series of works from the suction to the release (stop of the suction) of the food 40. The series supplying work may be performed by the right hand part 18 and the left hand part 19, or may be performed only by one hand part. The work operation time is shortened by alternately performing the works by the right hand part 18 and the left hand part 19.

As illustrated in Fig. 4, the series of supplying works are repeated to place a given number of (in this embodiment, six) foods 40 in order. Then, the wrist part 17 is rotated so that the opposing surface of the left hand part 19 and the opposing surface of the right hand part 18 face each other. Moreover, the arm parts 15 position the gripping parts 30 outside both ends of a plurality of foods 40 located in a line. The wrist parts 17 lower the right hand part 18 and the left hand part 19 to cause the supporting members 32 to touch the upper part of the foods 40. Then, the arm part 15 moves the left hand part 19 to the right and the arm part 15 moves the right hand part 18 to the right so that the spacing between the opposing surface of the left hand part 19 and the opposing surface of the right hand part 18 are narrowed. Thus, the plurality of foods 40 is pinched and held between the pinching part of the left hand part 19 and the pinching part of the right hand part 18. Thus, the wrist part 17 raises the right hand part 18 and the left hand part 19. Here, the right hand part 18 and the left hand part 19 are raised to the same height to lift from the workbench 42 the plurality of foods 40 placed in order so that the triangular surfaces contact each other.

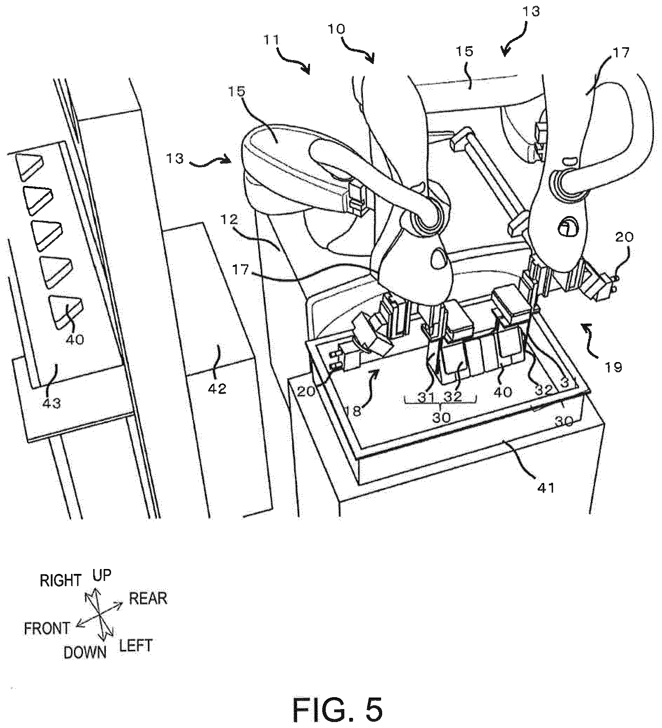

As illustrated in Fig. 5, the pair of arms 13 are rotated with respect to the carriage 12 to turn the right hand part 18 and the left hand part 19. Thus, the foods 40 pinched by the gripping parts 30 of the right hand part 18 and the left hand part 19 are carried to a location above the tray 41.

Then, the wrist part 17 lowers the right hand part 18 and the left hand part 19 to place the foods 40 on the tray 41. When the right hand part 18 and the left hand part 19 are moved so that the spacing between the opposing surface of the left hand part 19 and the opposing surface of the right hand part 18 increases, the foods 40 are accommodated into the tray 41. Note that, as described above, the arm part 15 and the wrist part 17 function as the conveying part which conveys the plurality of foods 40 gripped by the gripping parts 30 to the location on the tray 41.

According to the structure, the gripping part 30 has the pair of pinching members 31 which pinch the plurality of foods 40 from both sides in the directions in which the plurality of foods 40 are placed in order. Even if the foods 40 are rice balls or sandwiches which are easy to deform, the foods 40 can be accommodated in the tray 41 by the pinching member 31 pinching and conveying the foods 40, without the deformation of the foods 40. Therefore, the increase in the nonconforming products is prevented and the reduction in the work efficiency is controlled.

Moreover, the pair of pinching members 31 are comprised of the plate bodies which are provided in parallel to each other. Thus, since the pinching members 31 have the simple shape, the product cost is lowered. Further, since the pinching members 31 are thin, they can pack the foods 40 into the tray 41 with a reduced spacing from previously-accommodated foods 40 in the tray 41.

Further, the feeding part 20 has the suction heads 23 which suck the food 40. The food 40 is sucked by the suction heads 23 and supplied to the workbench 42 etc. Thus, even if the foods 40 are easy to deform, the foods 40 can be supplied without the deformation.

Moreover, the gripping part 30 further has the supporting member 32 which supports the plurality of foods 40 from different sides from the both ends in the directions in which the plurality of foods 40 are placed in order. Since the foods 40 are supported by the supporting members 32 in addition to the pinching members 31, the foods 40 can be gripped more securely. Thus, a drop, a deformation, etc. of the food 40 is prevented.

Further, the supporting member 32 has the mountain shape which spreads downwardly. For example, the food 40 is supported from a larger number of directions because the mountain-shaped supporting members 32 contact the upper part of the foods 40, such as the triangular rice balls or sandwiches. Therefore, the foods 40 are gripped more securely and the deformation of foods 40 is prevented.

Further, the outer surface of the food 40 has a pair of parallel triangular surfaces, and the plurality of foods 40 are lifted by the pair of pinching members 31 in the state where the foods 40 are placed in order so that the triangular surfaces contact each other. Thus, the foods 40 are gripped stably, a storage rate of the foods 40 in the tray 41 increases, and the work efficiency is improved.

Further, the food packing device is comprised of the robot 11 including the pair of arms 13 each having the gripping part 30 at the tip end thereof. For example, each of the feeding part 20 and the gripping part 30 may be removably attached to the wrist part 17 via an attaching part (not illustrated). The feeding part 20 is provided to the tip end of the arm 13 by being attached to the wrist part 17 via the attaching part, and the gripping part 30 is provided to the tip end of the arm 13 by being attached to the wrist part 17 via the attaching part. According to this structure, the food packing work is possible, for example, only by using the general-purpose robot 11 of which the tip end can be replaced.

### (Other Embodiments)

In the above embodiment, although the suction heads 23 are used in the feeding part 20, the present disclosure is not limited to the suction heads 23 as long as the feeding part 20 can supply the foods 40 to the workbench 42 etc. For example, the feeding part 20 may be an L-shaped plate member. In this case, the L-shaped plate member scoops up the foods 40 and supplies the foods 40 to the workbench 42 etc.

In the above embodiment, although the mountain-shaped plate member is used as the supporting member 32, the present disclosure is not limited to this structure as long as the supporting member 32 has a shape which can support the food(s) 40. For example, the supporting member 32 may be a flat plate member. In this case, the supporting member 32 may support an upper surface of food(s) 40 having a rectangular parallelepiped shaped, or may support a side surface of the rectangular parallelepiped-shaped food(s) 40, or may support a lower surface of the food(s) 40. Among others, if the upper surface and/or the side surface of the food(s) 40 having the rectangular parallelepiped shape are supported by the supporting members 32, the supporting members 32 are not provided below the food(s) 40. In this case, when the foods 40 are released from the gripping part 30, the foods 40 can be packed in the tray 41 with a smaller spacing between the foods 40, without the necessity of the large spacing between the pair of pinching members 31.

In the above embodiment, a non-skid member 33 may be further provided to the opposing surface of the pinching member 31. The non-skid member 33 is a member which increases the frictional coefficient between the opposing surface of the pinching member 31 and the food 40, and for example is made of elastic material, such as rubber. The non-skid member 33 has a thin sheet shape, for example.

In the above embodiment, a sensor (not illustrated) which detects the existence of the food 40 being conveyed on the conveyor belt 43 may be further provided. The sensor is provided in front of the robot 11, and detects the existence of the food 40 being carried on the conveyor belt 43 to a location in front of the robot 11. The control device 14 of the robot 11 causes the suction heads 23 to suck the food 40 in response to a detection signal from the sensor.

In the above embodiment, a camera (not illustrated) which detects the orientation of the food 40 being conveyed on the conveyor belt 43 may be further provided. The camera is provided above the conveyor belt 43 and images the food 40 being carried on the conveyor belt 43 to the location in front of the robot 11. The control device 14 of the robot 11 detects the orientation of the food 40 based on the image of the food 40 imaged by the camera. Then, the wrist part 17 rotates the feeding part 20 based on the orientation of the food 40, and changes the posture of the food 40 so that the rectangular surface of the food 40 is oriented downwardly.

In the above embodiment, the mountain-shaped supporting member 32 is used. The supporting member 32 is comprised of the two plate bodies, and the spacing between the two plate bodies may be adjustable. In this case, an actuator (not illustrated), such as a cylinder, is attached to one or both of the two plate bodies, and the actuator moves one or both of the two plate bodies. For example, the foods 40 are gripped by narrowing the spacing between the pair of pinching members 31 and narrowing the spacing between the two plate bodies. Thus, the foods 40 can be gripped more securely.

In the above embodiment, suction opening(s) (not illustrated) may be formed in the contacting surface of the supporting member 32, which contacts the food 40. In this case, a vacuum generator (not illustrated) is connected with the suction opening(s) through piping (not illustrated), and an on-off valve is provided to the piping. Operation of the vacuum generator, and opening and closing of the on-off valve are controlled by the control device 14. For example, the spacing between the pair of pinching members 31 is narrowed, and the food 40 is sucked through the suction opening(s). Thus, the foods 40 are gripped more securely. Note that the vacuum generator connected with the suction opening(s) may also be used as the vacuum generator 25 connected with the suction heads 23. The suction opening(s), the vacuum generator, etc. may be provided to the packing device 10 with the actuator which adjusts the spacing between the two plate bodies of the supporting member 32. Thus, the foods 40 are gripped by the gripping part 30 more stably.

It is apparent for a person skilled in the art that many improvements and other embodiments of the present disclosure are possible from the above description. Therefore, the above description is to be interpreted only as illustration, and it is provided in order to teach a person skilled in the art the best mode that implements the present disclosure. Details of the structures and/or the functions may be substantially changed without departing from the spirit of the present disclosure.

### INDUSTRIAL APPLICABILITY

The present disclosure is useful for the food packing device etc. which can control the reduction in the work efficiency.

### DESCRIPTION OF REFERENCE CHARACTERS

- 10:: Packing Device
- 20:: Feeding Part
- 23:: Suction Head
- 30:: Gripping Part
- 31:: Pinching Member
- 32:: Supporting Member
- 40:: Food
- 41:: Tray

## Claims

1. A food packing device, comprising:
a feeding part configured to supply food;
a gripping part configured to grip a plurality of foods placed in order by the feeding part; and
a conveying part configured to convey onto a tray the plurality of foods gripped by the gripping part,
wherein the gripping part has a pair of pinching members configured to pinch the plurality of foods from both sides in directions in which the plurality of foods are placed in order.

2. The food packing device of claim 1, wherein the pair of pinching members are comprised of plate bodies provided in parallel to each other.

3. The food packing device of claim 1 or 2, wherein the feeding part has a suction head configured to suck the food.

4. The food packing device of any one of claims 1 to 3, wherein the gripping part further has a supporting member configured to support the plurality of foods from a different side from both ends in the directions in which the plurality of foods are placed in order.

5. The food packing device of claim 4, wherein the supporting member has a mountain shape spreading downwardly.

6. The food packing device of any one of claims 1 to 5, wherein an outer surface of the foods has a pair of parallel surfaces, and the pair of pinching members pinch the plurality of foods placed in order in a state the parallel surfaces contact each other.

7. The food packing device of any one of claims 1 to 6, comprised of a robot including a pair of arms each having the gripping part at a tip end thereof.
